(19) **Europäisches Patentamt**
**European Patent Office**
**Office européen des brevets**

(11) **EP 1 508 500 B1**

(12) **EUROPEAN PATENT SPECIFICATION**

(45) Date of publication and mention
of the grant of the patent:
**09.04.2008 Bulletin 2008/15**

(51) Int Cl.:
***B62D 6/00*** *(2006.01)*     ***B62D 5/04*** *(2006.01)*

(21) Application number: **03723161.0**

(22) Date of filing: **21.04.2003**

(86) International application number:
**PCT/JP2003/005071**

(87) International publication number:
**WO 2003/091084 (06.11.2003 Gazette 2003/45)**

(54) **METHOD FOR CONTROLLING MOTION OF VEHICLE AND MOTION CONTROLLER OF VEHICLE**

VERFAHREN ZUR STEUERUNG DER BEWEGUNG EINES FAHRZEUGS UND
FAHRZEUGBEWEGUNGSSTEUERUNG

PROCEDE ET DISPOSITIF DE COMMANDE DE MOUVEMENT DE VEHICULE

(84) Designated Contracting States:
**DE FR GB**

(30) Priority: **26.04.2002 JP 2002126768**

(43) Date of publication of application:
**23.02.2005 Bulletin 2005/08**

(73) Proprietor: **JTEKT CORPORATION**
**Chuo-ku,**
**Osaka (JP)**

(72) Inventors:
• **Kato, Hiroaki,**
**JTEKT Corporation**
**Chuo-ku**
**Osaka (JP)**
• **Momiyama, Minekazu,**
**JTEKT Corporation**
**Chuo-ku**
**Osaka (JP)**
• **Yasui, Yoshiyuki,**
**Aisin Seiki Kabushiki Kaisha**
**Kariya-shi,**
**Aichi 448-8650 (JP)**
• **Tanaka, Wataru,**
**Aisin Seiki Kabushiki Kaisha**
**Kariya-shi,**
**Aichi 448-8650 (JP)**

• **Asano, Kenji,**
**Advics Co., Ltd.**
**Kariya-shi,**
**Aichi 448-8650 (JP)**
• **Imoto, Yuzou,**
**Advics Co., Ltd.**
**Kariya-shi,**
**Aichi 448-8650 (JP)**
• **Ono, Eiichi,**
**K. K. Toyota Chuo Kenkyusho**
**Aichi-gun,**
**Aichi 480-1192 (JP)**
• **Muragishi, Yuji,**
**K. K. Toyota Chuo Kenkyusho**
**Aichi-gun,**
**Aichi 480-1192 (JP)**

(74) Representative: **TBK-Patent**
**Bavariaring 4-6**
**80336 München (DE)**

(56) References cited:
**JP-A- 4 310 474**     **JP-A- 5 105 103**
**JP-A- 11 001 175**     **JP-A- 11 078 945**
**US-A- 6 102 151**     **US-B1- 6 219 603**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

TECHNICAL FIELD

The present invention relates to motion control method of vehicle and motion control apparatus of vehicle.

BACKGROUND ART

The document US 6,219,603 B1 discloses a motion control device of a vehicle provided with a transfer ratio variable mechanism for changing a transfer ratio by driving a motor, in the middle of a steering transfer system connecting a steering wheel and steered wheels, wherein a steering wheel torque generated in accordance with an operation of said steering wheel is determined by using a motor torque generated by a motor of said transfer ratio variable mechanism and a rotation angle of the steering wheel, on the basis of a dynamic equation expressing a torque transfer.

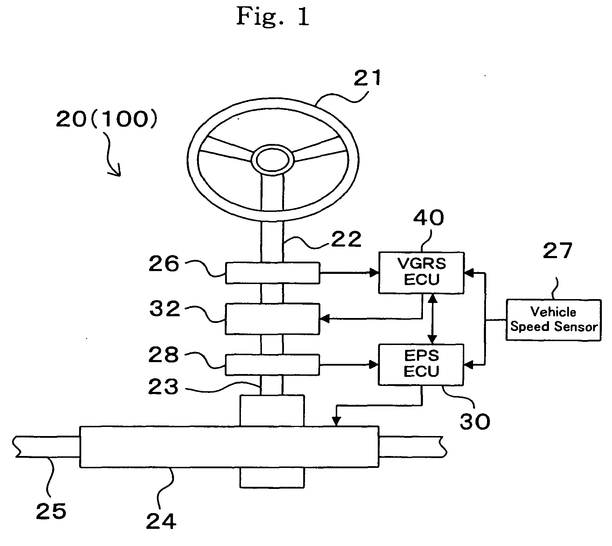

As a vehicle motion control apparatus including a transmission ratio changing mechanism for changing the transmission ratio by driving a motor, provided halfway of a steering transmission system which connects a steering wheel to steered wheels, a further vehicle motion control apparatus 100 which comprises a steering wheel 21, a first steering shaft 22, a second steering shaft 23, an EPS actuator 24, rods 25, a steering angle sensor 26, a vehicle velocity sensor 27, a torque sensor 28, an EPS_ECU 30, a gear ratio changing mechanism 32, a VGRS_ECU 40 and the like, as shown in Fig. 1, is available. In the meantime, such "a transmission ratio changing mechanism for changing a transmission ratio by driving an electric motor, located halfway of a steering transmission system which connects the steering wheel to the steered wheels" is sometimes called variable gear ratio system (referred to as VGRS, hereinafter) depending on a case.

That is, an end of the first steering shaft 22 is connected to the steering wheel 21 and an input side of the gear ratio changing mechanism 32 is connected to the other end side of this first steering shaft 22. This gear ratio changing mechanism 32 comprises a motor, a reduction gear and the like. An end side of the second steering shaft 23 is connected to this output side of the gear ratio changing mechanism and an input side of the EPS actuator 24 is connected to the other end side of the second steering shaft 23. The EPS actuator 24 is an electric type powered steering system, which is capable of converting a rotary motion inputted by the second steering shaft 23 through a rack and pinion gear (not shown) and the like to a motion in the axial direction of the rods 25 and outputting it. Further, this EPS actuator 24 generates an assist force depending on a steering condition by means of an assist motor which is controlled by the EPS_ECU 30 so as to assist steering by a driver. A rotation angle (steering angle) of the first steering shaft 22 is detected by a steering angle sensor 26 and inputted to the VGRS_ECU 40 as a steering angle signal. A steering torque by the second steering shaft 23 is detected by a torque sensor 28 and inputted to the EPS control process 30a as a torque signal. Further, a vehicle velocity is detected by a vehicle velocity sensor 27 and inputted to the EPS_ECU 30 and VGRS_ECU 40 as a vehicle velocity signal. Further, steered wheels (not shown) are attached to rods 25.

With such a structure, ratio between input gear and output gear is changed depending on vehicle velocity at real time by means of a motor and reduction gear in the gear ratio changing mechanism 32 and VGRS_ECU 40 so as to change a ratio of output angle of the second steering shaft 23 relative to the steering angle of the first steering shaft 22. The EPS actuator 24 and the EPS_ECU 30 generate an assist force for assisting steering of the vehicle driver by means of an assist motor depending on vehicle driver's steering condition and vehicle velocity detected by means of the torque sensor 28 and the vehicle velocity sensor 27.

Consequently, the steering gear ratio corresponding to the vehicle velocity can be set. For example, an output angle by the gear ratio changing mechanism 32 can be set to be increased with respect to the steering angle of the steering wheel at the time of vehicle stopping or traveling at a low velocity. Further, the output angle of the gear ratio changing mechanism 32 can be set to be decreased with respect to the steering angle of the steering wheel at the time of traveling at a high velocity. Meanwhile, an appropriate assist force corresponding to the vehicle velocity can be generated by means of an assist motor.

For example, if a vehicle is stopping or traveling at a low velocity, the steering gear ratio by the gear ratio changing mechanism 32 is set low and an assist force is intensified by an assist motor, so that the steered wheels can be steered largely even with a light steering operation. This facilitates the steering operation of a vehicle driver. On the other hand, if the vehicle is traveling at a high velocity, the assist force by the assist motor drops and the steering ratio by the gear ratio changing mechanism 32 is set high. Consequently, the steering operation becomes heavy and even if the steering wheel is turned largely, it comes that the steered wheels are steered a little. Consequently, it can be expected that vehicle control stability is further improved.

However, in a vehicle motion control apparatus mentioned above, a torque sensor 28 detecting a steering torque detects a torque generated by a second steering shaft 23 corresponding to an output shaft of a gear ratio variable mechanism 32. In other words, the gear ratio variable mechanism 32 is interposed between a steering wheel 21 and the torque sensor 28. Therefore, a steering wheel torque generated by the steering wheel 21 does not necessarily coincide with a torque detected by the torque sensor 28. In the case that the torque detected by the torque sensor 28 is used as a steering torque for controlling an EPS actuator 24, there is a problem that a delicate uncomfortable feeling can be applied to a steering feeling on the basis of a slight mismatch which may be generated between the driver's steering feeling and an actual steering.

The problem mentioned above can be solved by arranging a torque sensor in a first steering shaft 22 corresponding to an input shaft of the gear ratio variable mechanism 32 and using a torque signal from the torque sensor for controlling the EPS actuator 24. However, since it is necessary to arrange the torque sensor independently from the torque sensor 28 of the second steering shaft 23, there is generated a new problem that an increase in a number of the parts and an increase in a manufacturing cost are caused.

The present invention is made for the purpose of solving the problems mentioned above, and an object of the present invention is to provide a motion control method of a vehicle and a motion control apparatus of a vehicle which can improve a motion controllability of the vehicle without increasing a number of parts.

DISCLOSURE OF THE INVENTION

In order to achieve the above objects, according to claim 1, a motion control method of a vehicle provided with a transfer ratio variable mechanism for changing a transfer ratio by driving a motor, and an assist motor assisting a steering force on the basis of a steering torque, in the middle of a steering transfer system connecting a steering wheel and steered wheels, wherein a steering wheel torque generated in accordance with an operation of said steering wheel is determined by using a steering torque generated by an output shaft of said transfer ratio variable mechanism, a motor torque generated by a motor of said transfer ratio variable mechanism and a rotation angle of said motor, on the basis of a dynamic equation expressing a torque transfer by said transfer ratio variable mechanism, and said assist motor is controlled by setting the determined steering wheel torque to said steering torque.

Further, according to claim 3, a motion control apparatus of a vehicle provided with a transfer ratio variable mechanism for changing a transfer ratio by driving a motor, and an assist motor assisting a steering force on the basis of a steering torque, in the middle of a steering transfer system connecting a steering wheel and steered wheels, wherein the motion control apparatus is provided with a steering wheel torque calculating means for determining a steering wheel torque generated in accordance with an operation of said steering wheel by using a steering torque generated by an output shaft of said transfer ratio variable mechanism, a motor torque generated by a motor of said transfer ratio variable mechanism and a rotation angle of said motor, on the basis of a dynamic equation expressing a torque transfer by said transfer ratio variable mechanism, and said assist motor is controlled by setting the determined steering wheel torque determined by said steering wheel torque calculating means to said steering torque.

In accordance with a first aspect and a third aspect of the present invention, a steering wheel torque generated in accordance with an operation of a steering wheel is determined by using a steering torque generated by an output shaft of a transfer ratio variable mechanism, a motor torque generated by a motor of the transfer ratio variable mechanism and a rotation angle of the motor, on the basis of a dynamic equation expressing a torque transfer by the transfer ratio variable mechanism, and the assist motor is controlled by setting the determined steering wheel torque to the steering torque.

For example, in the case that the dynamic equation is constituted by the following formula (1), a steering wheel torque Th can be determined by using a steering torque Tp generated in the output shaft of the transfer ratio variable mechanism, a motor torque Tvm generated by a motor of the transfer ratio variable mechanism and a rotation angle θvm of the motor. Accordingly, the steering wheel torque can be known without adding any new torque sensor or the like. Therefore, the steering wheel torque Th can be determined in accordance with an arithmetic processing by means of a control computer, by detecting the steering torque Tp generated in the output shaft of the transfer ratio variable mechanism by means of an existing torque sensor, and detecting the motor torque Tvm and the motor rotation angle θvm by means of existing rotation angle sensor and current sensor which are used for controlling the motor. Accordingly, it is possible to improve a motion controllability of the vehicle without increasing the number of the parts.

$$\text{Th} - \text{Tp} + \text{Tvm} = \text{Jvm} \times d2\theta\text{vm}/dt2 + \text{Rvm} \times \text{sign}(d\theta\text{vm}/dt) \cdots (1)$$

In the above formula, Th is a steering wheel torque (N · m), Tp is a steering torque (N · m) generated in the output shaft of the transfer ratio variable mechanism, Tvm is a motor torque (N · m) generated by the motor of the transfer ratio variable mechanism, Jvm is a motor inertia (kg · m2) of the transfer ratio variable mechanism, θvm is a motor rotation angle (rad) of the transfer ratio variable mechanism, and Rvm is a Coulomb friction resistance (N · m/rad) of the transfer ratio variable mechanism, respectively. Further, "d/dt" of d2θvm/dt2 and dθvm/dt in the formula (1) expresses a differential operation by time t, and sign() expresses an operation determining code in parentheses. In this case, in the first aspect and the third aspect, Jvm and Rvm in the formula (1) are defined as constant numbers.

Further, according to claim 2, a motion control method of a vehicle as claimed in claim 1, wherein said steering wheel torque is determined by using at least one term of an inertia term by said transfer ratio variable mechanism and a Coulomb friction term by said transfer ratio variable mechanism, in configuration terms of the dynamic equation expressing the torque transfer by said transfer ratio variable mechanism.

Further, according to claim 4, a motion control apparatus of a vehicle as claimed in claim 3, wherein said steering wheel torque calculating means determines said steering wheel torque by using at least one term of an inertia term of said transfer ratio variable mechanism and a Coulomb friction term of said transfer ratio variable mechanism, in configuration terms of the dynamic equation expressing the torque transfer by said transfer ratio variable mechanism.

In accordance with a second aspect and a fourth aspect of the present invention, the steering wheel torque is determined by using at least one term of an inertia term of the transfer ratio variable mechanism and a Coulomb friction term of the transfer ratio variable mechanism, in configuration terms of the dynamic equation expressing the torque transfer by the transfer ratio variable mechanism. For example, in the case that the dynamic equation is constituted by the formula (1) mentioned above, the steering wheel torque is determined by using at least one term of the inertia term (a term of Jvm) of the transfer ratio variable mechanism constituting a right side first term of the formula (1) and the Coulomb friction term (a term of Rvm) of the transfer ratio variable mechanism constituting a right side second term of the formula (1). Accordingly, in the first aspect and the third aspect, the steering wheel torque is determined by employing a measured value or a design value for at least one term of the Jvm and Rvm set to the constant numbers. Therefore, it is possible to improve an accuracy of operation of the arithmetic processing of determining the steering wheel torque Th. Accordingly, it is possible to further improve the motion controllability of the vehicle without increasing the number of the parts.

BRIEF DESCRIPTION OF THE DRAWINGS

Fig. 1 is a schematic view showing a summary of a structure of a vehicle motion control apparatus;

Fig. 2 is a function block diagram expressing a vehicle motion control process in accordance with EPS_ECU and VGRS_ECU of a vehicle motion control apparatus of the present embodiment;

Fig. 3 is a flow chart showing a flow of a steering wheel torque computing process in accordance with EPS_ECU of the vehicle motion control apparatus of the present embodiment.

BEST MODE FOR CARRYING OUT THE INVENTION

Hereinafter, the embodiment of the vehicle motion control apparatus which the vehicle motion control method and vehicle motion control apparatus of the present invention will be described with reference to the accompanying drawings. Meanwhile, because the vehicle motion control apparatus 20 of this embodiment is not different from the vehicle motion control apparatus 100 in terms of mechanical structure, the vehicle motion control apparatus 20 (100) shown in Fig. 1 will be described.

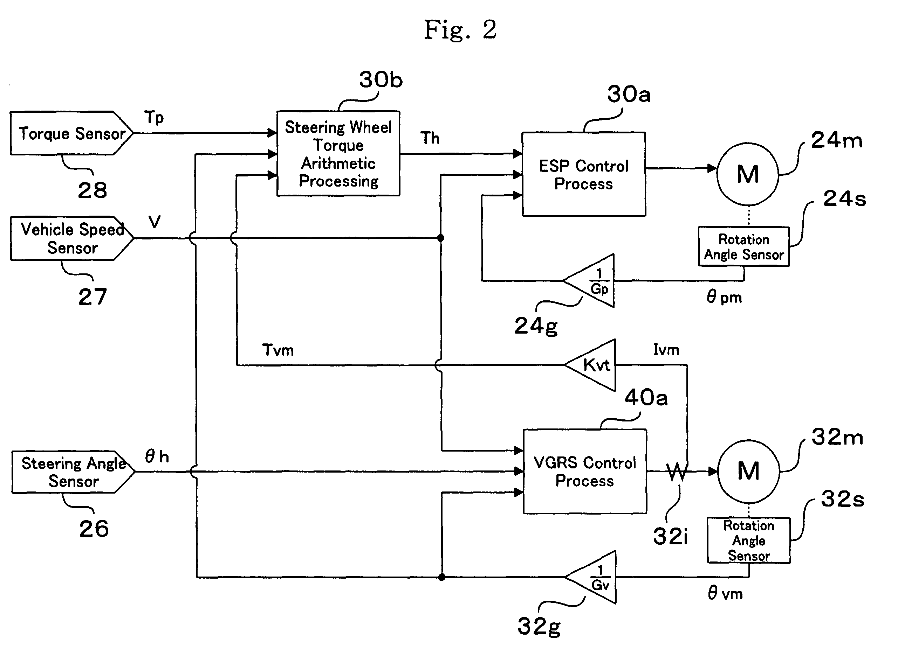

As shown in Fig. 1, a vehicle motion control apparatus 20 comprises a steering wheel 21, a first steering shaft 22, a second steering shaft 23, an EPS actuator 24, rods 25, a steering angle sensor 26, a vehicle velocity sensor 27, a torque sensor 28, an EPS_ECU 30, a gear ratio changing mechanism 32, a VGRS _ECU 40 and the like. Since mechanical and electrical connections of a vehicle motion control apparatus have been already described, description thereof is omitted here and the characters relating to the present invention are mainly described based on Fig. 2. Fig. 2 shows a functional block diagram showing vehicle motion control processing by means of the EPS_ECU 30 and VGRS_ECU 40 of the vehicle motion control apparatus 20 of this embodiment.

As shown in Fig. 2, in the vehicle motion control apparatus 20 of this embodiment, two processings, that is; an EPS control process 30a by the EPS _ECU 30 and VGRS control process 40a by the VGRS_ECU 40 are carried out by an electronic control unit (ECU). That is, the vehicle motion control apparatus 20 has a function for controlling the steering gear ratio by means of the gear ratio changing mechanism 32 according to VGRS control process 40a with the VGRS_ECU 40, depending on the vehicle velocity. Further, it has a function of assisting steering by the vehicle driver by generating an assist force depending on steering condition by means of the EPS control process 30a with the EPS _ECU 30.

Accordingly, in a VGRS control process 40a, a steering angle signal θ h generated by a steering angle sensor 26 and a vehicle velocity signal V generated by a vehicle velocity sensor 27 are input to a VGRS_ECU 40, whereby there is executed a process of determining a rotation angle of a motor 32m in a gear ratio variable mechanism 32 uniquely defined in correspondence to a vehicle velocity on the basis of a motor rotation angle map (not shown), and a motor voltage in correspondence to a determined rotation angle command value is supplied to the motor 32m in accordance with a motor drive circuit. Therefore, in the gear ratio variable mechanism 32 and the VGRS_ECU 40, a ratio of an output gear with respect to an input gear is changed in real time in correspondence to a vehicle velocity by the motor 32m and a reduction gear 32g, and a ratio Gv of an output angle of a second steering shaft 23 is changed with respect to a steering angle of a first steering shaft 22.

Further, in an EPS control process 30a, a steering torque signal Tp generated by a torque sensor 28 and the vehicle velocity signal V generated by the vehicle velocity sensor 27 are input to an EPS_ECU 30, whereby there is executed a process of determining a current command value of an assist motor 24m in an EPS actuator 24 uniquely defined in correspondence to the vehicle velocity on the basis of a motor current map (not shown), and a motor voltage in correspondence to a determined current command value is supplied to the motor 32m in accordance with a motor drive circuit. Therefore, in the EPS actuator 24 and the EPS_ECU 30, by EPS control process 30a, an assist force for assisting the steering operation of the driver is generated by the assist motor 24m, in correspondence to a steering state of the driver and a vehicle velocity which are detected by the torque sensor 28 and the vehicle velocity sensor 27.

Respective function summaries of each of an EPS control process 30a by the EPS_ECU 30 and a VGRS control process 40a by the VGRS_ECU 40 are basically the same as the vehicle motion control process by the vehicle motion control apparatus 100 mentioned above. However, the vehicle motion control apparatus 20 of the present embodiment is different from the conventional vehicle motion control apparatus 100 in a point that a steering torque Tp detected by the torque sensor 28 is input to the EPS control process 30a via a steering wheel torque arithmetic process 30b in place of being directly input to the EPS control process 30a computed by the EPS_ECU 30.

In other words, as shown in Fig. 1, since the vehicle motion control apparatus 20 is structured such that a gear ratio variable mechanism 32 is interposed between the steering wheel 21 and the torque sensor 28, the steering wheel torque Th generated by the steering wheel 21 does not necessarily coincide with the torque detected by the torque sensor 28. Accordingly, as described in BACKGROUND OF THE INVENTION, in the case that the torque detected by the torque sensor 28 is used as the steering torque Tp for controlling the EPS actuator 24 , there is the problem that the delicate uncomfortable feeling can be applied to the steering feeling on the basis of the slight mismatch which may be generated between the driver's steering feeling and the actual steering.

Therefore, the inventors of the present application expresses a torque transfer by the gear ratio variable mechanism 32 by a dynamic expression as shown by the following formula (2), thereby calculating the steering torque Th in accordance with the arithmetic processing by the EPS_ECU 30 on the basis of the dynamic equation (2) and using the calculated steering wheel torque Th for controlling the EPS actuator 24. A motor torque Tvm by the motor 32m of the gear ratio variable mechanism 32 is calculated by the following formula (3).

$$(\text{Th} - \text{Tp})/\text{Gv} + \text{Tvm} = \text{Jvm} \times d2\,\theta\text{vm}/dt2 + \text{Rvm} \times \text{sign}(d\,\theta\text{vm}/dt)\cdots(2)$$

$$\text{Tvm} = \text{Kvt} \times \text{Jvm}\cdots(3)$$

In the above formulas, Th is a steering wheel torque (N · m), Tp is a steering torque (N · m) generated in the second steering shaft 23 corresponding to the output shaft of the gear ratio transfer mechanism 32, Gv is a gear ratio (no-unit number) of the gear ratio variable mechanism 32, Tvm is a motor torque (N · m) generated by the motor 32m, Jvm is a motor inertia (kg · m2) of the gear ratio variable mechanism 32, θvm is a motor rotation angle (rad) of the motor 32m, Rvm is a Coulomb friction resistance (N · m/rad/sec) of the gear ratio variable mechanism 32, Kvt is a motor torque constant (N · m/A) of the motor 32m, and Jvm is a motor current (A) of the motor 32m, respectively. Further, "d/dt" of d2 θvm/dt2 and d θvm/dt in the formula (2) expresses a differential operation by time t, and sign( ) expresses an operation determining code in parentheses.

In specific, the steering torque Tp is detected by the torque sensor 28, and the motor current Jvm and the motor rotation angle θvm of the motor 32m are detected by a current sensor 32i and a rotation angle sensor 32s which are normally used for controlling the drive of the motor 32m, respectively. In this case, an inertia term corresponding to a right side first term of the formula (2) mentioned above and a Coulomb friction term corresponding to a right side second term are appropriately set as required, by applying the motor inertia Jvm and the Coulomb friction resistance Rvm to the measured value or the design value of the gear ratio variable mechanism 32, respectively. Further, the motor torque constant Kvt of the motor 32m is set on the basis of the measured value or the design value of the motor 32m.

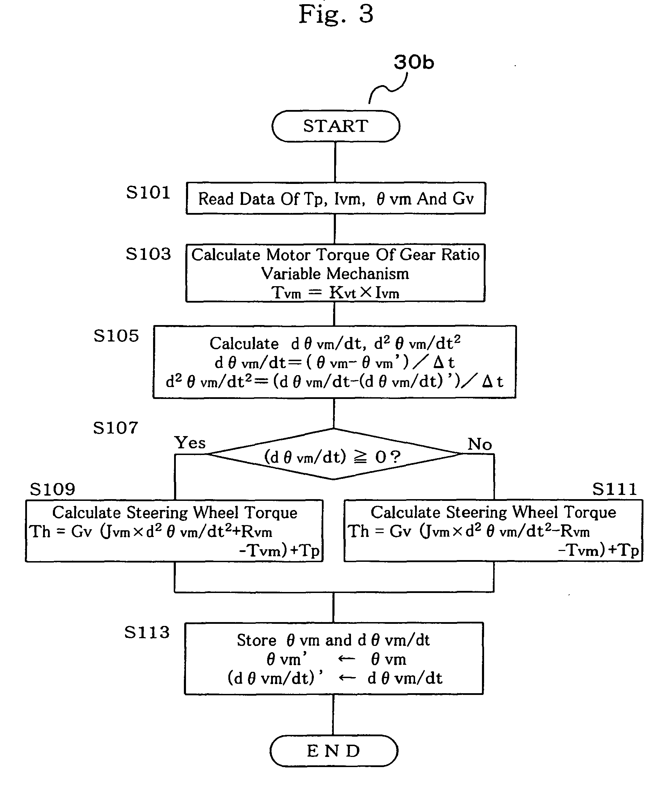

Accordingly, it is possible to calculate the motor torque Tvm generated by the motor 32m in accordance with the formula (3) mentioned above, and calculate the steering wheel torque Th by the operation in accordance with the formula (2) mentioned above, respectively. Therefore, in the present embodiment, the steering wheel torque Th is determined by executing the torque arithmetic process 30b shown in Fig. 3 by the EPS_ECU 30. In this case, the steering wheel torque arithmetic process 30b is repeatedly executed at fixed intervals (for example, every 5 millisecond) in accordance with a predetermined timer interrupt processing or the like.

In other words, as shown in Fig. 3 , in the steering wheel arithmetic process 30b, a process of reading data of the steering torque Tp, the motor current Jvm, the motor rotation angle θvm and the gear ratio Gv is first executed by a step S101 after a predetermined initializing process. Since the steering torque Tp is detected by the torque sensor 28 and input to the EPS_ECU 30, the motor current Jvm is detected by the current sensor 32i and input to the EPS_ECU 30, and the motor rotation angle θvm is detected by the rotation angle sensor 32s and input to the EPS_ECU 30, respectively, a data reading is executed by reading the data in accordance with a proper interrupt processing or the like. Further, the gear ratio Gv of the gear ratio variable mechanism 32 is data read by being received from a VGRS control process 40a by a VGRS_ECU 40.

In the next step S103, a process of calculating the motor torque Tvm is executed by the motor 32m of the gear ratio variable mechanism 32. This process is computed on the basis of the formula (3) mentioned above, and the motor torque Tvm is calculated by multiplying the preset motor torque constant Kvt and the motor data of the motor current Jvm read by the step S101.

In the succeeding step S105, there are executed a process (dθvm/dt) of differentiating the motor rotation angle θvm by the time t, and a process (d2 θvm/dt2) of differentiating the results thereof by the time t, that is, a process of computing dθvm/dt and d2θvm/dt2 in the formula (2) mentioned above. In specific, dθvm/dt is calculated by dividing a value obtained by subtracting the previous value θvm' from this time θvm by a time $\Delta$t between the previous time and this time, as shown by the following formula (4), and d2 θvm/dt2 is calculated by dividing a value obtained by subtracting the previous value (dθvm/dt)' from this time dθvm/dt by the time $\Delta$t between the previous time and this time, as shown by the following formula (5).

$$d\theta vm/dt = (\theta vm - \theta vm')/\Delta t \cdots (4)$$

$$d2\theta vm/dt2 = (d\theta vm/dt - (d\theta vm/dt)')/\Delta t \cdots (5)$$

In a step S107, there is executed a process of determining a code of (d θvm/dt), that is, a process of computing sign (dθvm/dt) in the formula (2) mentioned above, by determining whether or not the value (dθvm/dt) computed by the step S105 is equal to or more than 0 (zero).

In other words, since all of the parameters required for determining the steering wheel torque Th from the formula (2) mentioned above are prepared by setting the motor inertia Jvm of the gear ratio variable mechanism 32 and the Coulomb friction resistance Rvm of the gear ratio variable mechanism 32 from the design values or the like, a process of calculating the steering wheel torque Th is executed by selecting the arithmetic expressions (6) and (7) corresponding to the code of (dθvm/dt) by the step S107, thereby changing the process to the succeeding steps S109 and S111 is executed.

If it is determined that the value (dθvm/dt) is equal to or more than 0 (zero) in the determining process by the step S107 (Yes in S107), sign in the value (dθvm/dt) is positive (+). Accordingly, the steering wheel torque Th is calculated in accordance with the following formula (6) adding the Coulomb friction resistance Rvm of the gear ratio variable mechanism 32 by a step S109. On the other hand, if it is not determined that the value (dθvm/dt) is equal to or more than 0 (zero) in the determining process by the step S107 (No in S107), sign in the value (dθvm/dt) is negative (-). Accordingly, the steering wheel torque Th is calculated in the following formula (7) subtracting the Coulomb friction resistance Rvm of the gear ratio variable mechanism 32 by the step S109. In this case, the formulae (6) and (7) are formed by modifying the formula (2) mentioned above, for calculating the steering wheel torque Th.

$$Th = Gv \times (Jvm \times d2\theta vm/dt2 + Rvm - Tvm) + Tp \cdots (6)$$

$$Th = Gv \times (Jvm \times d2\theta vm/dt2 - Rvm - Tvm) + Tp \cdots (7)$$

If the steering wheel torque Th is calculated in accordance with a step S109 or a step S111, the result of calculation is transferred to the EPS control process 30a, and there is executed a process of storing the values θvm and d θvm/dt calculated at this time as θvm' and (dθvm/dt)' respectively in predetermined memory areas of the EPS_ECU 30 for the next present steering wheel torque arithmetic process 30b. Accordingly, a series of present steering wheel torque arithmetic process 30b is finished.

As described above, in the vehicle motion control apparatus 20 on the basis of the present embodiment, the steering wheel torque Th generated by the operation of the steering wheel 21 is determined in accordance with the steering wheel torque arithmetic process 30b by the EPS_ECU 30, by using the steering torque Tp generated in the second steering shaft 23 corresponding to the output shaft of the gear ratio variable mechanism 32, the motor torque Tvm generated by the motor 32m of the gear ratio variable mechanism 32 and the rotation angle θvm of the motor 32m, on the basis of the dynamic equation (the formula (2)) mentioned above expressing the torque transfer by the gear ratio variable mechanism 32.

Therefore, even in the case that the vehicle motion control apparatus 20 employs the structure that the gear ratio variable mechanism 32 is interposed between the steering wheel 21 and the torque sensor 28, it is possible to know the steering wheel torque Th generated by the steering wheel 21 before passing through the gear ratio variable mechanism 32, without adding any new torque sensor or the like. Accordingly, it is possible to execute an actual steering control which coincides with the steering feeling applied by the driver, by employing the steering wheel torque Th for the EPS control process 30a. Therefore, it is possible to improve the motion controllability of the vehicle without increasing the number of the parts, and it is possible to solve the delicate uncomfortable feeling in the steering feeling.

## Claims

1. A motion control method of a vehicle provided with a transfer ratio variable mechanism (32) for changing a transfer ratio by driving a motor (32m), and an assist motor (24m) assisting a steering force on the basis of a steering torque, in the middle of a steering transfer system connecting a steering wheel (21) and steered wheels, wherein a steering wheel torque (Th) generated in accordance with an operation of said steering wheel (21) is determined by using a steering torque (Tp) generated by an output shaft of said transfer ratio variable mechanism (32), a motor torque (Tvm) generated by a motor of said transfer ratio variable mechanism (32) and a rotation angle (θvm) of said motor (32m), on the basis of a dynamic equation expressing a torque transfer by said transfer ratio variable mechanism (32), and said assist motor (24m) is controlled by setting the determined steering wheel torque (Th) to said steering torque.

2. A motion control method of a vehicle as claimed in claim 1, wherein said steering wheel torque (Th) is determined by using at least one term of an inertia term by said transfer ratio variable mechanism (32) and a Coulomb friction term by said transfer ratio variable mechanism (32), in configuration terms of the dynamic equation expressing the torque transfer by said transfer ratio variable mechanism (32).

3. A motion control apparatus of a vehicle provided with a transfer ratio variable mechanism (32) for changing a transfer ratio by driving a motor (32m), and an assist motor (24m) assisting a steering force on the basis of a steering torque, in the middle of a steering transfer system connecting a steering wheel (21) and steered wheels, wherein the motion control apparatus is provided with a steering wheel torque calculating means (30b) for determining a steering wheel torque generated in accordance with an operation of said steering wheel by using a steering torque (Th) generated by an output shaft of said transfer ratio variable mechanism (32), a motor torque (Tvm) generated by a motor (32m) of said transfer ratio variable mechanism (32) and a rotation angle (θvm) of said motor (32m), on the basis of a dynamic equation expressing a torque transfer by said transfer ratio variable mechanism (32), and said assist motor (24m) is controlled by setting the determined steering wheel torque (Th) determined by said steering wheel torque calculating means (30b) to said steering torque.

4. A motion control apparatus of a vehicle as claimed in claim 3, wherein said steering wheel torque calculating means determines (30b) said steering wheel torque (Th) by using at least one term of an inertia term of said transfer ratio variable mechanism and a Coulomb friction term of said transfer ratio variable mechanism (32), in configuration terms of the dynamic equation expressing the torque transfer by said transfer ratio variable mechanism (32).

## Patentansprüche

1. Bewegungssteuerungsverfahren eines Fahrzeugs, das mit einem Übertragungsverhältniswechselmechanismus (32) zum Ändern eines Übertragungsverhältnisses durch Antreiben eines Motors (32m) und einem Hilfsmotor (24m), der eine Lenkkraft auf der Basis eines Lenkmoments unterstützt, in der Mitte eines Lenkübertragungssystems versehen ist, das ein Lenkrad (21) und gelenkte Räder verbindet, wobei ein Lenkradmoment (Th), das in Übereinstimmung mit einer Betätigung des Lenkrads (21) erzeugt wird, durch ein Verwenden eines Lenkmoments (Tp), das durch eine Ausgangswelle des Übertragungsverhältniswechselmechanismus (32) erzeugt wird, eines Motormoments (Tvm), das durch einen Motor des Übertragungsverhältniswechselmechanismus (32) erzeugt wird, und eines Drehwinkels (θvm) des Motors (32m) auf der Basis einer dynamischen Gleichung bestimmt wird, die eine Momentübertragung durch den Übertragungsverhältniswechselmechanismus (32) ausdrückt, wobei der Hilfsmotor (24m) durch ein Einstellen des ermittelten Lenkradmoments (Th) auf das Lenkmoment gesteuert wird.

**2.** Bewegungssteuerungsverfahren eines Fahrzeugs nach Anspruch 1, wobei das Lenkradmoment (Th) durch ein Verwenden wenigstens eines Terms von einem Trägheitsterm durch den Übertragungsverhältniswechselmechanismus (32) und einem Coulombreibungsterm durch den Übertragungsverhältniswechselmechanismus (32) in Konfigurationstermen der dynamischen Gleichung bestimmt wird, die die Momentübertragung durch den Übertragungsverhältniswechselmechanismus (32) ausdrückt.

**3.** Bewegungssteuerungsgerät eines Fahrzeugs, das mit einem Übertragungsverhältniswechselmechanismus (32) zum Ändern eines Übertragungsverhältnisses durch ein Antreiben eines Motors (32m) und mit einem Hilfsmotor (24m), der eine Lenkkraft auf der Basis eines Lenkmoments unterstützt, in der Mitte eines Lenkübertragungssystems versehen ist, das ein Lenkrad (21) und gelenkte Räder verbindet, wobei das Bewegungssteuerungsgerät mit einer Lenkradmomentberechnungseinrichtung (30b) zum Bestimmen eines Lenkradmoments, das in Übereinstimmung mit einer Betätigung des Lenkrads erzeugt wird, durch ein Verwenden eines Lenkmoments (Th), das durch eine Ausgangswelle des Übertragungsverhältniswechselmechanismus (32) erzeugt wird, eines Motormoments (Tvm), das durch einen Motor (32m) des Übertragungsverhältniswechselmechanismus (32) erzeugt wird, und eines Drehwinkels (θvm) des Motors (32m) auf der Basis einer dynamischen Gleichung versehen ist, die eine Momentübertragung durch den Übertragungsverhältniswechselmechanismus (32) ausdrückt, und der Hilfsmotor (24m) durch ein Einstellen des bestimmten Lenkradmoments (Th), das durch die Lenkradmomentberechnungseinrichtung (30b) bestimmt wird, auf das Lenkmoment gesteuert wird.

**4.** Bewegungssteuerungsgerät eines Fahrzeugs nach Anspruch 3, wobei die Lenkradmomentberechnungseinrichtung (30b) das Lenkradmoment (Th) durch ein Verwenden wenigstens eines Terms von einem Trägheitsterm des Übertragungsverhältniswechselmechanismus und einem Coulombreibungsterm des Übertragungsverhältniswechselmechanismus (32) in Konfigurationstermen der dynamischen Gleichung bestimmt, die die Momentübertragung durch den Übertragungsverhältniswechselmechanismus (32) ausdrückt.

**Revendications**

**1.** Procédé de commande de mouvement d'un véhicule pourvu d'un mécanisme de variation de rapport de transfert (32) destiné à modifier un rapport de transfert en entraînant un moteur (32m), et d'un moteur d'assistance (24m) qui assiste une force de direction sur la base d'un couple de direction, au milieu d'un système de transfert de direction reliant un volant de direction (21) et des roues dirigées, un couple de volant de direction (Th) généré en fonction d'un actionnement dudit volant de direction (21) étant déterminé en utilisant un couple de direction (Tp) généré par un arbre de sortie dudit mécanisme de variation de rapport de transfert (32), un couple de moteur (Tvm) généré par un moteur dudit mécanisme de variation de rapport de transfert (32) et un angle de rotation (θvm) dudit moteur (32m), sur la base d'une équation dynamique exprimant un couple de transfert par ledit mécanisme de variation de rapport de transfert (32), et ledit moteur d'assistance (24m) étant commandé en réglant le couple de volant de direction (Th) déterminant audit couple de direction.

**2.** Procédé de commande de mouvement d'un véhicule selon la revendication 1, selon lequel ledit couple de volant de direction (Th) est déterminé en utilisant au moins un terme d'un terme d'inertie par ledit mécanisme de variation de rapport de transfert (32) et d'un terme de friction de Coulomb par ledit mécanisme de variation de rapport de transfert (32), dans des termes de configuration de l'équation dynamique exprimant le couple de transfert par ledit mécanisme de variation de rapport de transfert (32).

**3.** Dispositif de commande de mouvement d'un véhicule pourvu d'un mécanisme de variation de rapport de transfert (32) destiné à modifier un rapport de transfert en entraînant un moteur (32m), et d'un moteur d'assistance (24m) qui assiste une force de direction sur la base d'un couple de direction, au milieu d'un système de transfert de direction reliant un volant de direction (21) et des roues dirigées, le dispositif de commande de mouvement étant pourvu de moyens de calcul de couple de volant de direction (30b) destinés à déterminer un couple de volant de direction généré en fonction d'un actionnement dudit volant de direction en utilisant un couple de direction (Th) généré par un arbre de sortie dudit mécanisme de variation de rapport de transfert (32), un couple de moteur (Tvm) généré par un moteur (32m) dudit mécanisme de variation de rapport de transfert (32) et un angle de rotation (θvm) dudit moteur (32m), sur la base d'une équation dynamique exprimant un couple de transfert par ledit mécanisme de variation de rapport de transfert (32), et ledit moteur d'assistance (24m) étant commandé en réglant le couple de volant de direction (Th) déterminant par lesdits moyens de calcul de couple de volant de direction (30b) audit couple de direction.

4. Dispositif de commande de mouvement d'un véhicule selon la revendication 3, dans lequel lesdits moyens de calcul de couple de volant de direction (30b) déterminent ledit couple de volant de direction (Th) en utilisant au moins un terme d'un terme d'inertie dudit mécanisme de variation de rapport de transfert et d'un terme de friction de Coulomb dudit mécanisme de variation de rapport de transfert (32), dans des termes de configuration de l'équation dynamique exprimant le couple de transfert par ledit mécanisme de variation de rapport de transfert (32).

Fig. 1

Fig. 2

EP 1 508 500 B1

# Fig. 3

30b

$$\boxed{\text{START}}$$

S101 | Read Data Of Tp, Ivm, $\theta$ vm And Gv

S103 | Calculate Motor Torque Of Gear Ratio
Variable Mechanism
$$Tvm = Kvt \times Ivm$$

S105 | Calculate $d\theta vm/dt$, $d^2\theta vm/dt^2$
$$d\theta vm/dt = (\theta vm - \theta vm')/\Delta t$$
$$d^2\theta vm/dt^2 = (d\theta vm/dt - (d\theta vm/dt)')/\Delta t$$

S107

Yes ⟋ $(d\theta vm/dt) \geqq 0$ ? ⟍ No

S109 | Calculate Steering Wheel Torque
$$Th = Gv\,(Jvm \times d^2\theta vm/dt^2 + Rvm - Tvm) + Tp$$

S111 | Calculate Steering Wheel Torque
$$Th = Gv\,(Jvm \times d^2\theta vm/dt^2 - Rvm - Tvm) + Tp$$

S113 | Store $\theta$ vm and $d\theta vm/dt$
$$\theta vm' \leftarrow \theta vm$$
$$(d\theta vm/dt)' \leftarrow d\theta vm/dt$$

$$\boxed{\text{E N D}}$$

**EP 1 508 500 B1**

**REFERENCES CITED IN THE DESCRIPTION**

**Patent documents cited in the description**

- US 6219603 B1